# EUROPEAN PATENT SPECIFICATION

(11) **EP 0 519 962 B1**
(45) Date of publication and mention of the grant of the patent: **31.01.1996**
(21) Application number: 91905647.3
(22) Date of filing: 09.03.1991
(51) Int. Cl.: H04N 7/30

(54) **DIGITAL IMAGE CODING USING A RANDOM SCANNING OF IMAGE FRAMES**
DIGITALE BILDKODIERUNG MIT EINER ZUFALLSABTASTUNG DER BILDER
CODAGE D'IMAGE NUMERIQUE UTILISANT UNE ANALYSE ALEATOIRE DE TRAMES IMAGE

(30) Priority: 15.03.1990 US 494101
(43) Date of publication of application: 30.12.1992
(73) Proprietor: THOMSON multimedia, F-92400 Courbevoie (FR)
(72) Inventor: SAVATIER, Tristan, Los Angeles, CA 90024 (US); DELPUCH, Alain, Los Angeles, CA 90025 (US)
(74) Representative: Hartnack, Wolfgang, Dipl.-Ing.
(86) International application number: PCT/EP91/00449
(87) International publication number: WO 91/14295

(56) References cited:
- US-A- 4 394 774
- US-A- 4 704 628
- IEEE Transactions on Circuits and Systems, vol. 35, no. 2, Fe- bruary 1988 (New York, NY, US) H. Gharavi: "Low bit-rate video transmission for ISDN application", pages 258-261
- Symposium Record on the 16th International TV Symposium, Montreux (CH), 17-22 June 1989, "Broadcast Sessions" K. Grotz et al.: "Image coding techniques for 64 kbit/s channels", pages 387-409, see page 388, paragraph 2.2 "Structure for a still picture codec"
- NTZ, Nachrichtentechnische Zeitschrift, Vol. 42, no. 3, March 1989 (Berlin, DE) D. Biere et al.: "Video Codec und Endgeräte für das ISDN-Bildtelefon", pages 136-138, 140-142
- 1989 International Conference on Acoustics, Speech and Signal Processing, 23-26 May 1989, Glasgow, Scotland, GB; ICASSP 89, vol. 3, "Multidimensional Signal Processing", "Audio & Electroacoustics", IEEE T. Murakami et al.: "A 24bit DSP for motion video codec and software development support system", pages 1929-1932

## Description

### Background of the invention

The present invention relates to digital image coding using a random scanning method.

A large number of coding methods.for full-motion digital images have been proposed in recent years.

Because the available data rate in present transmission channels and storage media is limited it is an object of these coding methods to reduce the data rate of the coded and transmitted or stored video signal.

For the purpose of storing digital motion images on optical storage media, e.g. CD-ROM, MOD (Magneto Optical Disc), a maximum video data rate of about 1.2 Mbits/s is allowed.

One general example of a system for coding and decoding digital video signals is disclosed in "Scene Adaptive Coder", W.H. Chen, W.K. Pratt, IEEE Transactions on Communications, Vol. COM-32, No. 3, issued in March, 1984 in which scene adaptive coding/decoding of video signals is described, using DCT (discrete cosine transform), a variable threshold for the DCT coefficients, quantization, Huffman-coding and a buffer in the coder and a buffer, Huffmann decoder, threshold adding and inverse DCT in the decoder.

Another such coding/decoding system is disclosed in Comparison Between Progressive and Interlaced Scanning for a Future HDTV System with Digital Data Rate Reduction", D. Westerkamp, H. Peters, Proceedings of the 2nd International Workshop of Signal Processing for HDTV, l'Aquila, February 29 - March 2, 1988. This codec contains a motion adaptive intrafield/interframe coding processor.

The digitized video data are transformed by means of a DCT with a blocksize of 8*8 samples. The coefficients obtained are scanned within the blocks in a zig-zag fashion, in order to optimize the runlength of zeros. Taking into account the frequency response of the human visual system, the coefficients are weighted in two dimensions, thereby attenuating high frequencies.

The maximum coefficient is detected. The value of this coefficient in combination with the status of the buffer controls the accuracy of an uniform quantizer. All AC coefficients are quantized by this quantizer and the step size is transmitted to the receiver.

In the interframe mode the differences between the coefficients of the previous frame are calculated and these values are quantized in the same way as the coefficients in the intraframe mode. The decision whether the intrafield or the interframe mode is used is controlled by the number of non-zero coefficients. The values selected for transmission are encoded by a variable length Huffmann encoder and stored in a buffer for transmission.

In both systems the fullness of the buffer controls the threshold and the quantizer step size, respectively. It is to be made sure that the buffer will have no overflow or underflow within the present frame. This causes a varying quantizer step size and a consequently varying image quality within each frame.

In US-A- 4,785,349 regions of a frame are coded in a different manner. This may also cause a varying image quality within each frame. See also US-A- 4 704 628 and US-A-4 394 774.

From the above mentioned documents it is known that a coding scheme is such that the more a block is quantized the less bits it takes to code it. It is also known that the quantization is adaptive to the image content.

Two methods are currently applied to compute the level of quantization required to compress the data rate of the DCT-coefficients within a given amount of bits N:
(a) Compute a threshold/quantization step size so that a frame can be coded in approximately N bits. Apply the quantizer with this uniform step size to the whole frame.
(b) Scan the blocks in rows and columns and compute a local threshold/quantization step size.

Method (a) allows to apply a spatially uniform step size of quantization to the whole image. But computing the right level of quantization to code the image in as close as possible to N bits is very difficult.

Method (b) allows to compute quantization step size block by block. However, it does not provide a uniform level of quantization in the spatial domain. Therefore the image quality will be different for the blocks of each frame.

### Summary of the invention

It is an object of the present invention to spatially distribute a quantization level of a coded digital image before its compression.

A digital image can be described as a set of blocks B(n,i,j) of pixels, where i (resp. j) gives the location of the block in the frame in terms of row (resp. column) and n is a frame number.

F is called the quantization function applied to the block B(n,i,j) with the level L. Applying the quantization function to a block produces another block where some of the information of the original has been discarded. The higher the quantization level and the coarser the quantization, respectively, is, the smaller the code is and the-larger the amount of information discarded. Therefore the quantization level increases when the buffer tends to be filled too fast, and decreases when the buffer tends to be filled to slowly. The total number of bits required to code the quantized image shall be close to a size N of a buffer. But if the blocks then are scanned and encoded column by column or row by row, the adaptive quantization technique would not work well, because the observation of the size of the already coded blocks would not provide a good estimation of the overall complexity of the entire image.

The basic idea of the invention is to scan the blocks of the image not row by row or column by column but in a random fashion.

In order to have a better estimation of what quantization level should be used, even when few blocks have been already processed, the blocks are scanned and encoded in a pseudo-random order, which is identical in both the coder and decoder. In case of a fixed scanning order for all frames the kind of scanning method need not to be transmitted.

But the pseudo-random block scanning order can also be changed for each frame to get even better results.

When a given block B(n,i,j) is picked, the following steps are carried out:
(1) Compute the level of quantization L that should be applied with F to B(n,i,j) as a function of N and of the blocks which have already been scanned,
(2) Pick randomly a new block among the remaining non-scanned blocks,
(3) Go back to (1).

In order to guaranty the data rate and to avoid buffer overflow or underflow the quantization is adapted by means of a quantization level, which is recalculated after each block B(n,i,j) has been encoded.

The quantization level is calculated as a function of the amount of the already encoded data for the frame, compared with the allowed buffer size. This way quantization level can be recalculated by the decoder and does not need to be transmitted.

The advantages of the present invention will become more apparent from the following more detailed description when taken in conjunction with the accompanying drawings.

Reference is also made to the invention as set out in the appended claims.

### Brief description of the drawings

Fig. 1 is a schematic block diagram of a coder
Fig. 2 is a schematic block diagram of a decoder
Fig. 3 shows an image with randomly scanned blocks of pixels
Fig. 4 shows a quantization matrix for luminance blocks
Fig. 5 shows a scanning order
Fig. 6 shows a quantizer function graph

### Description of the preferred embodiments

The images have a medium resolution, e.g. 704 * 288 pixels. The luminance component Y is coded for each of the pixels, whereas the color components U and V are coded in the form of macro-pixels, a macro-pixel being made of 4 luminance pixels.

Each frame is divided into marcro-blocks of 16*16 luminance pixels. Each macro-block is composed of:
- 4 blocks of 8*8 pixels for Y,
- 1 block of 8*8 macro-pixels for U,
- 1 block of 8*8 macro-pixels for V.
A single 704 * 288-image not encoded consists of:
- (704 / 16) * (288 / 16) = 792 macro blocks,
- 792 * 6 = 4752 blocks,
- 4752 * 64 = 304128 bytes.

Such a frame would occupy a size of about 300 KByte in the uncoded format, whereas the available bandwidth allows about (1.2 Mbit/s) / (8 * 25 /s) = 6 KByte per frame, i.e. less than 1/2 bit per pixel. A compression rate of about 1/50 is to be achieved.

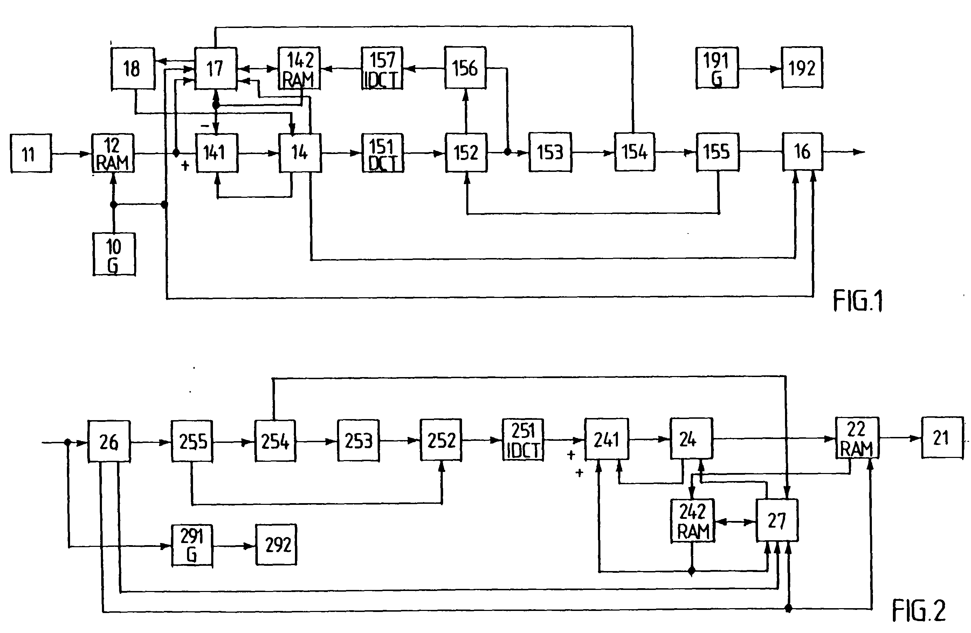

In Fig. 1 an digital image source 11 is connected to a pseudo-random scanning memory (a RAM) 12 which stores frame n. The pseudo random scanning memory 12 receives block addresses within the present image from a pseudo random block address generator 10, takes sequentially blocks of e.g. 8*8 pixels and stores them in a random fashion. Each block of pixels is then send to a subtractor 141 and to a motion compensation circuit 17.

As most of the time frame n-1 is very close to frame n, only the differences between frames n-1 and n are encoded. This technique is called interframe coding (delta-coding) and results in a relatively low data rate.

However in some cases it is necessary to encode a frame by itself, e.g. when there is a "cut" in the image sequence. This technique is called intraframe coding. It is also necessary to use intraframe coding to allow non-sequential decoding, e.g. start decoding from various points within an image sequence stored on a CD. But intraframe coding results in a higher data rate.

Because in case of motion in the image sequence interframe coding may yield no good quality of the coded image, moving pieces in the image sequence should be detected. Thereby the differences between the moving pieces from frame n-1 and the according pieces from frame n are minimized and the interframe coding leads to improved image quality. The purpose of motion compensation is to build an image as close as possible to frame n by only taking moving pieces out of frame n-1.

This is performed in the motion compensation circuit 17 on a block basis: the block B(n,i,j) of frame n located at frame coordinates (i,j) is evaluated by copying the block B'(n-1,i+x,j+y) located at frame coordinates (i+x, j+y) in a frame memory (a RAM) 142 which contains frame n-1. The motion compensation vector V(n,x,y) represents the apparent motion of the image at this point of screen. When using 8*8 pixel blocks for motion compensation the vectors may have a precision of ±1 pixel and a range of ±16 pixel.

Once a good approximation of frame n has been obtained from frame n-1 by using motion compensation, the residual pixel differences remain to be encoded. To have an estimation of the difference between two blocks and to decide for each block, if motion compensated interframe coding or intraframe coding yields better image quality in connection with a given data rate, an error function (e.g. the quadratic error) is evaluated in error evaluation circuit 18. The equation of the quadratic error is: 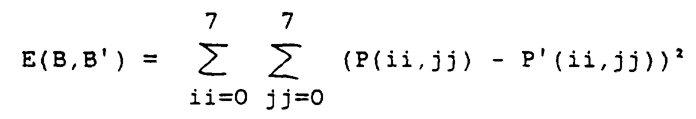 where ii and jj are the coordinates within the blocks B(n,i,j) and B'(n-1,i+x,j+y), respectively, of pixels P and P', respectively, and E(B,B') is an estimation of the difference between block B(n,i,j) of frame n and block B'(n-1,i+x,j+y) of frame n-1. B(n,i,j) is the target block (not coded), B'(n-1,i+x,j+y) is the block obtained after interframe coding.

Motion compensation is worth being encoded only if:${\text{E(B,B') < (1 / 2) * E(B,B}}_{\text{0}} \text{)}$ B₀ is the block B(n-1,i+x,j+y) obtained only with motion compensation (not interframe coded).

If motion compensation is calculated for 8*8 pixel blocks within a range of ±16 pixels, the research for the best matching block is performed in a 40*40 pixels area (33*33 possible displacements). A brute force search is performed among all the possible motion vectors (x,y) and the vector which corresponds to the minimum mean absolute error is chosen. This vector is transferred to a Huffman coder 154. Motion compensation circuit 17 may contain a memory in which this 40*40 pixel area is stored.

The equation of the mean absolute error Em is: 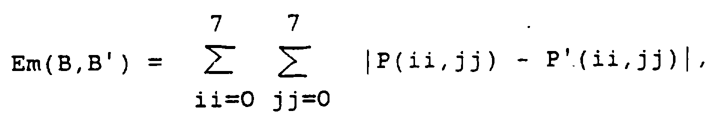 where ii and jj are the coordinates within the blocks B(n,i,j) and B'(n-1,i+x,j+y), respectively, of pixels P and P', respectively. B(n,i,j) is the target block (not coded), B'(n-1,i+x,j+y) is the block obtained after interframe coding. The Y component pixel values are used.

In theory the motion compensation should be performed in the decoded frame n-1 for that is the one used at decoding time to built the next frame, but practically the source frame n-1 is used instead of the decoded one.

Motion compensation vectors obtained by using source images are easier to encode efficiently, because of the lower level of noise and of the better quality of the source images compared with decoded images. Random noise tends to generate a random factor in the motion compensation vectors.

Motion compensating in principle is also described in US Patent No. 4,785,349, columns 27 - 29.

The value of the quadratic error, which has been calculated in error evaluation circuit 18, is send to inter/intra-circuit 14. In inter/intra-circuit 14 the decision is made which kind of coding leads to better coded image quality. In case of intraframe coding the block B'(n-1,i+x,j+y) of pixels of frame n-1 at the negative input of subtractor 141 is not subtracted from the according block of frame n. In case of interframe coding the subtractor 141 is active and the block B'(n-1,i+x,j+y), which is stored in frame memory 142, is (motion compensated) subtracted from the according block of frame n. Frame memory 142 receives addresses from motion compensation circuit 17.

The resulting block of pixels or pixel differences, respectively, is transformed in a DCT circuit 151. Each 8*8 block of values representing spatial data (such as the luminance component Y) is transformed by a DCT into an 8*8 block of spectral coefficients representing the frequency distribution in both, horizontal and vertical direction. The range of the coefficients in the transformed block is eight times the range of the values in the source block. The top-left coefficient of the transformed block is particular: it is the average value of the source block (multiplied by eight). This coefficient is called DC value, the other coefficients are called AC values. It appears that the DC coefficient is very important, and that even if a high quantization level is requested, there should be a minimum error on this value since an error on the average produces very noticeable artefacts (blocking effects).

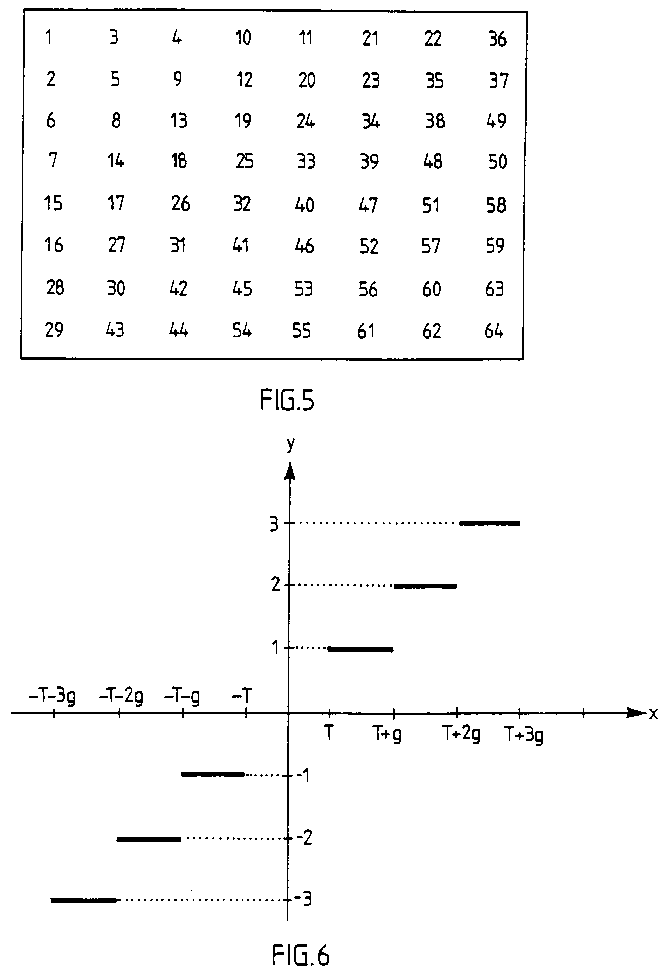

Before being encoded further, the block is quantized in quantizer 152 by an algorithm chosen to trade off perceived image quality against bit rate. The algorithm of quantizer 152 is described by the following equations:$\text{y=} \frac{\text{x-T}}{\text{g}} \text{+1 for x ≥ T,}$$\text{y = 0 for -T < x < T,}$$\text{y=} \frac{\text{x+T}}{\text{g}} \text{-1 for x ≤ -T,}$ where x is a DCT coefficient of the transformed block, y is the quantized coefficient, T is the threshold at which the output is forced to zero and g is the quantization step size. The values of T and g are chosen according to the available transmission or storage bandwidth. The according quantizer function graph is shown in Fig. 6.

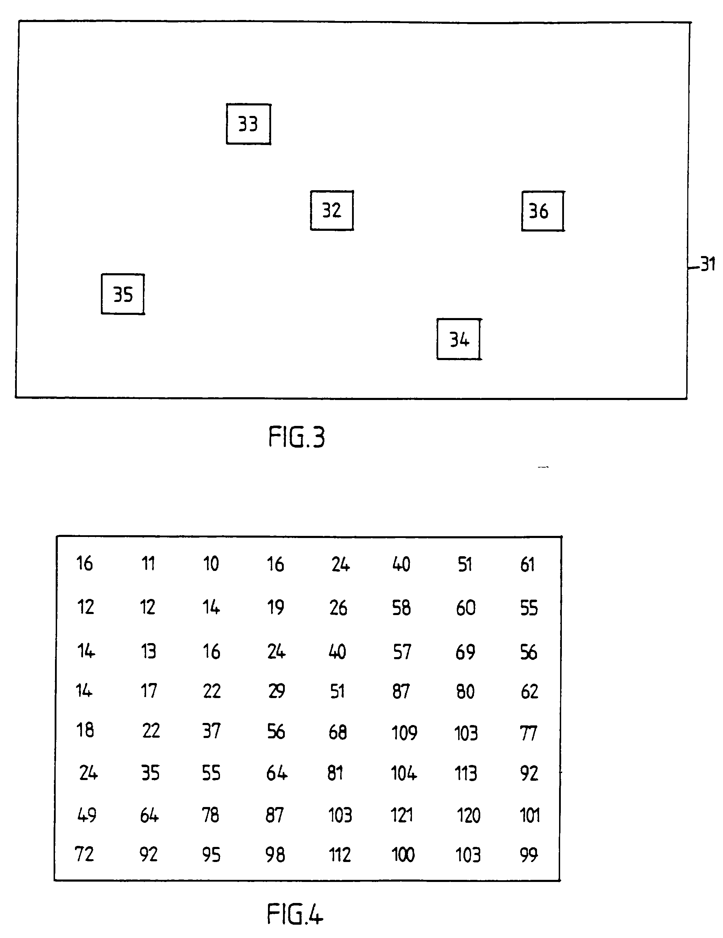

The quantizer step size g depends on the position of the coefficient in the transformed block: high frequency coefficients will be quantized coarser than low frequency coefficients because lower frequency DCT coefficients are relatively less important in the perception of the subjective quality of the decoded image. The quantizer step size is obtained for each position in the block by scaling with a predefined quantization matrix Q. As an example, the quantization matrix used for Y is shown in figure 4. A different quantization matrix is used for U and V.

A minimum value should be defined for g, to guarantee that the quantized frequency coefficients are always in the range covered by the code used to encode them. As for threshold T, one may use T = g / 2 .

In order to simulate the behaviour and the decoding error of a decoder (Fig. 2) and to correct the coding calculation within the coder (Fig. 1) accordingly, a feedback loop is built consisting of a de-quantizer 156 and a DCT circuit 157. De-quantizer 156 performs the according inverse function of quantizer 152 and DCT circuit 157 an inverse DCT. The decoded blocks B'(n-1,i,j) at the output of DCT circuit 157 are stored in frame memory 142 which is also connected to motion compensation circuit 17. By this way the feedback loop is closed.

The quantized block consists usually of few important spectral components (statistically concentrated in the low horizontal and vertical frequencies), separated by a lot of zeros. Therefore the quantized DCT coefficients in the block are first folded, thereby transformed in a linear list containing alternatively a run of r zeros (r may be equal to 0) and a non zero coefficient and are then encoded with variable wordlength (runlength coding) together with the motion vectors in the Huffman coder 154.

The folding of each of the matrices of 64 DCT coefficients is performed in a sorter 153 accordingly to the order shown in Fig. 5. The sorting starts with coefficient No. 1, which is the DC coefficient, is continued in a viceversa diagonal manner and ends with coefficient No. 64. This kind of sorting is called 'zigzag scanning'. After the last coefficient of the present block an End-of-Block code (EOB) is added.

The zigzag order can be chosen in order to increase the probability of having a very long run of zero coefficients until the end of the block. Because the EOB code is a frequent event, it is coded with few bits.

The optimal zigzag order depends on the quantization method and of the code used subsequently.

Zigzag scanning and runlength coding are described in principle in the above mentioned article "Scene Adaptive Coder" by Chen and Pratt.

The Huffman code for encoding the runs of zeros with a maximum efficiency contains 64 possible runs of r zeros (r ranging from 0 to 63). An additional code is reserved for the EOB sign. The code defined for each run of zeros is totally independent of the value that follows the run.

Another Huffman code encodes the non-zero coefficients with a maximum efficiency. The range covered by this code is [-256,-1] and [+1,+256].

As quantized non-zero coefficients have an important probability to be ± 1, particularly in the higher frequency coefficients because they are more strongly quantized, a special code has been reserved to code a terminal run of ±1 values. The signs of the non-zero coefficients are always coded with one bit, as their event may be considered as random with a 50% probability.

The Huffman coded data are stored in the buffer within buffer circuit 155 with a variable data rate and read out with a constant data rate. A channel coder 16 receives these data together with other signals.

In order to guaranty the data rate and to avoid buffer overflow or underflow the quantization step size of quantizer 152 and de-quantizer 156 is adapted by means of a quantization level, which is recalculated after each block has been encoded within buffer circuit 155 as a function of the amount of the already encoded data for the frame, compared with the total buffer size. This way quantization level can advantageously be recalculated by the decoder and does not need to be transmitted.

The goal is to adapt the estimated quantization level according to the actual filling rate of the buffer in buffer circuit 155. Because the blocks, e.g. 32, 33, 34, 35, 36, within the present frame 31 are scanned randomly according to the addresses generated in pseudo random block address generator 10 as mentioned before and indicated in Fig. 3, this leads to a better estimation of the appropriate overall quantization level within the present frame and this goal is reached with more reliability compared with prior art, where the blocks within the frame 31 are scanned row by row and column by column.

The pseudo-random block scanning order can be changed for each frame to get even better results. In this case the kind of block scanning will be transmitted and stored, respectively, too.

The channel coder 16 adds the inter/intra-information from inter/intra circuit 14, the Huffman coded motion compensation information and e.g. pseudo-random address information from pseudo-random address generator 10, audio signals, error correction information and sync words to the video data stream.

Clock Generator 191 supplies control circuit 192 with clock pulses. Control circuit 192 supplies all the other circuits in the coder with appropriate control signals.

In Fig. 2 a channel decoder 26 receives the storage media or transmission channel data stream. This data stream is split into luminance and chrominance signals (Y, U and V), motion compensation information, inter/intra-decision information, audio signals, sync words and, if required, pseudo random block addresses. In addition error correction is performed within channel decoder 26.

The video signal, e.g. the luminance component, is fed with a constant data rate together with the Huffman coded motion vectors into buffer circuit 255 and transferred with a variable data rate from this buffer to a Huffman decoder 254. In this circuit the according decoding of the different Huffman codes, the special code for a terminal run of ±1 values and EOB code is performed.

In the inverse sorter 253 an inverse scanning according to sorter 153 and Fig. 5 is performed. At the output are blocks of quantized 8*8 DCT coefficients available. In de-quantizer 252 the coefficients are expanded approximately to their value at the input of quantizer 152 in the coder. This includes an inverse scaling according to quantization matrix Q (Fig. 4). The quantization level in de-quantizer 252 is controlled by the fullness of the buffer and recalculated in buffer circuit 255 and does not need to be transmitted.

A DCT circuit 251 performs an inverse DCT on the 64 coefficients of each block.

The pixel values and pixel difference values, respectively, of the blocks are transferred to an adder 241. In case of intraframe coding of the present block the output signal from a frame memory 242 is not added and in case of interframe coding this output signal B'(n-1,i+x,j+y) is (motion compensated) added to the pixel difference values.

An inter/intra circuit 24 receives the inter/intra information from channel decoder 26 via motion compensation circuit 27. The inter/intra circuit 24 controls the adder 241 as described before. Motion compensation circuit 27 receives motion compensation vectors from Huffman decoder 254 and blocks of pixels of frame n-1 from frame memory 242.

So in case of intraframe coding advantageously motion compensation vectors need not to be transmitted. In case of motion the motion compensation circuit 27 can send motion compensation vectors from Huffman decoder 254 as addresses to frame memory 242. Motion compensation circuit 27 may contain a pixel memory.

The blocks B(n,i,j) of pixels of frame n at the output of inter/intra circuit 24 are written into a pseudo-random de-scanning frame memory 22 with addresses either with a fixed and stored or calculated order or by a transmitted order. These addresses are send from channel decoder 26 to pseudo-random de-scanning frame memory 22 and motion compensation circuit 27. Before storing the according blocks are written into frame memory 242 as frame n-1.

The pseudo random de-scanning memory 22 can be read out pixel by pixel and line by line. The resulting signal can be displayed e.g. on a TV screen 21.

The processing for the chrominance components U and V is performed in a similar way. The quantization matrix may vary. As mentioned before the motion vector calculation in motion compensation circuits 17 and 27, respectively, is carried out with the Y component only.

Clock regeneration circuit 291 supplies control circuit 292 with clock pulses. Control circuit 292 supplies all the other circuits in the decoder with appropriate control signals.

## Claims

1. Method of encoding and decoding digital image sequences, whereby said image sequences are divided into frames (31) which each contain a plurality of blocks of pixel values, comprising the following encoding steps:
- taking by pseudo-random scanning of said frames (31) said blocks (32 - 36) of pixel values to form a sequence of blocks for sequential processing of these blocks;
- transforming (151) each of said blocks of pixel values to a block of coefficients;
- quantizing (152, Fig. 6) each block of coefficients using an individually calculated block quantization level, which is controlled by the fullness of a buffer (155), and using a quantization matrix (Fig. 4) for quantizing individually each coefficient of the block;
- coding (154) each of said block of quantized coefficients with variable word length, thereby providing a group of coded coefficients,
and comprising the following decoding steps:
- decoding (254) respectively each of said group of coded coefficients, thereby providing a block of decoded coefficients;
- de-quantizing (252) each block of decoded coefficients individually using the respective inverse encoding quantization level, which is controlled by the fullness of a second buffer (255), and using a respective inverse quantization matrix for de-quantizing individually each decoded coefficient of the block;
- respective inverse transforming (251) of said block of de-quantized coefficients to a block of pixel values;
- inserting said block of pixel values in frames (31) of a respective digital video signal in the same pseudo-random order as used when encoding.

2. Method according to claim 1, which represents an intraframe mode, further including the encoding steps of:
- calculating (141) for an interframe mode blocks of pixel difference values between the present block and a block which has the same respective spatial location in the preceding frame;
- motion compensation (17) of said blocks of pixel difference values;
- calculating (18) for each of said blocks a block error, e.g. quadratic error and/or mean absolute error, and deciding (14) for each of said blocks if intraframe or motion compensated interframe mode is to be carried out,
whereby said respective intraframe or interframe mode is used when decoding.

3. Apparatus for encoding digital image sequences using a method according to claim 2, comprising:
- means (11) for providing a digital video signal of a type in which each frame thereof comprises a plurality of blocks of pixel values;
- means (10) for scanning the frames in a pseudo-random order to get said blocks of pixel values;
- means (17) for estimating motion vectors for motion compensation of said blocks of pixel values connected with means (18) for calculating block errors between said motion compensated blocks and said blocks of pixel values;
- means (141) for calculating blocks of pixel difference values;
- means (14) for comparing intraframe-blocks of pixel values and motion compensated interframe-blocks of pixel difference values and choosing one of both blocks of values according to the result of said block error calculation (18), whereby a respective intra/inter decision signal is included in the output signal of said apparatus;
- means (151) for transforming said blocks of pixel values and pixel difference values, respectively, with a DCT transformation to blocks of coefficients;
- means (152) for quantizing individually each of said block of coefficients according to a quantization level controlled by the fullness of a buffer (155) and for quantizing individually each coefficient of the block using a quantization matrix (Fig. 4), whereby the output of said quantizing means (152) are connected, too, with means (156) for respective inverse de-quantizing, which are followed by means (157) for respective inverse transforming, which are followed by frame store means (142), which are connected to said means (17) for estimating motion vectors for motion compensation;
- means (154) for Huffman coding said blocks of quantized coefficients and said motion vectors, thereby providing groups of coded coefficients which are stored intermediately in said buffer (155), whereby this buffer outputs via a channel encoder (16), in which said intra/inter decision signal and the addresses of said pseudo-random scanning order are added to the signal stream, the output signal of said apparatus.

4. Apparatus for decoding digital image sequences using a method according to claim 2, comprising:
- a channel decoder (26) which provides a motion compensation circuit (27) with a respective inter/intra-decision signal and a frame memory (22) with addresses of said pseudo-random scanning order;
- a posterior buffer circuit (255) which controls a de-quantizer (252) for de-quantizing individually with a respective inverse encoding quantization level each block of decoded coefficients and for de-quantizing each decoded coefficient individually by the inverse use of said encoding quantization matrix (Fig. 4);
- a Huffman decoder (254), following said buffer circuit (255), for decoding said groups of coded coefficients and motion compensation information, thereby providing blocks of decoded coefficients to said de-quantizer (252) and motion vectors to said motion compensation circuit (27);
- an IDCT circuit (251), following said de-quantizer (252), for respective inverse transforming said blocks of decoded coefficients with an inverse DCT to blocks of pixel values and pixel difference values, respectively;
- a posterior adder (241) which adds in case of interframe mode the respective motion compensated block of pixel values from a second frame memory (242) to said pixel difference values;
- a posterior inter/intra circuit (24) which receives said inter/intra decision signal from said channel decoder (26) via said motion compensation circuit (27) and which controls said adder (241) as described before, whereby said motion compensation circuit (27) receives blocks of pixel values of the preceding frame from said second frame memory (242);
- said frame memory (22) for inserting the blocks of pixel values in said output frames of said digital video signal in a respective pseudo-random order.

## Patentansprüche

1. Verfahren zur Kodierung und Dekodierung digitaler Bildfolgen, wobei die Bildfolgen in Vollbilder (31) unterteilt sind, die jeweils eine Vielzahl von Blöcken von Pixelwerten enthalten, mit den folgenden Kodier-Schritten:
- Nehmen der Blöcke (32 - 36) von Pixelwerten mittels Pseudozufalls-Abtastung der Vollbilder (31) zur Bildung einer Folge von Blöcken zur sequentiellen Verarbeitung dieser Blöcke;
- Transformieren (151) eines jeden der Blöcke von Pixelwerten in einen Block von Koeffizienten;
- Quantisieren (152, Fig. 6) eines jeden Blocks von Koeffizienten mittels eines individuell berechneten Blockquantisierungsgrades, welcher durch die Füllung eines Puffers (155) gesteuert wird, und mittels einer Quantisierungsmatrix (Fig. 4) zum individuellen Quantisieren eines jeden Koeffizienten des Blocks;
- Kodieren (154) eines jeden der Blöcke quantisierter Koeffizienten mit variabler Wortlänge, wodurch man eine Gruppe kodierter Koeffizienten erhält; und mit den folgenden Dekodier-Schritten:
- entsprechendes Dekodieren (254) aller der Gruppe kodierter Koeffizienten, wodurch man einen Block dekodierter Koeffizienten erhält;
- individuelles Dequantisieren (252) eines jeden Blocks dekodierter Koeffizienten mittels des entsprechenden inversen Kodierungs-Quantisierungsgrades, welcher durch die Füllung eines zweiten Puffers (255) gesteuert wird, und mittels einer entsprechenden inversen Quantisierungsmatrix zum individuellen Dequantisieren eines jeden dekodierten Koeffizienten des Blocks;
- entsprechende inverse Transformierung (251) des Blocks dequantisierter Koeffizienten in einen Block von Pixelwerten;
- Einsetzen des Blocks von Pixelwerten in Vollbilder (31) eines entsprechenden digitalen Videosignals in derselben pseudozufälligen Reihenfolge wie bei der Kodierung verwendet.

2. Verfahren nach Anspruch 1, das einen Intra-Vollbild-Modus darstellt, weiterhin mit den Kodier-Schritten:
- Berechnen (141), für einen Inter-Vollbild-Modus, Blöcke von Pixeldifferenzwerten zwischen dem gegenwärtigen Block und einem Block, welcher im vorherigen Vollbild an derselben entsprechenden räumlichen Position steht;
- Bewegungskompensation (17) der Blöcke von Pixeldifferenzwerten;
- Berechnen (18), für jeden der Blöcke, eines Blockfehlers, z.B. quadratischen Fehlers und/oder mittleren absoluten Fehlers, und Entscheiden (14), für jeden der Blöcke, ob Intra-Vollbild-Modus oder bewegungskompensierter Inter-Vollbild-Modus durchgeführt werden soll, wobei der entsprechende Intra-Vollbild- oder Inter-Vollbild-Modus bei der Dekodierung verwendet wird.

3. Vorrichtung zur Kodierung digitaler Bildfolgen mittels eines Verfahrens nach Anspruch 2 mit:
- Mitteln (11) zum Bereitstellen eines digitalen Videosignals eines Typs, in dem jedes seiner Vollbilder eine Vielzahl von Blöcken von Pixelwerten umfaßt;
- Mitteln (10) zum Abtasten der Vollbilder in einer Pseudozufalls-Reihenfolge zur Erlangung der Blöcke von Pixelwerten;
- Mitteln (17) zum Abschätzen von Bewegungsvektoren zur Bewegungskompensation der Blöcke von Pixelwerten, verbunden mit Mitteln (18) zum Berechnen von Blockfehlern zwischen den bewegungskompensierten Blöcken und den Blöcken von Pixelwerten;
- Mitteln (141) zum Berechnen von Blöcken von Pixeldifferenzwerten;
- Mitteln (14) zum Vergleichen von Intra-Vollbild-Blöcken von Pixelwerten und bewegungskompensierten Inter-Vollbild-Blöcken von Pixeldifferenzwerten und Auswählen eines der beiden Blöcke von Werten nach dem Ergebnis der Blockfehlerberechnung (18), wobei ein entsprechendes Intra/Inter-Entscheidungs-Signal in das Ausgangssignal der Vorrichtung eingefügt wird;
- Mitteln (151) zum Transformieren der Blöcke von Pixelwerten beziehungsweise Pixeldifferenzwerten mittels einer DCT-Transformation in Blöcke von Koeffizienten;
- Mitteln (152) zum individuellen Quantisieren jedes der Blöcke von Koeffizienten nach einem von der Füllung eines Puffers (155) gesteuerten Quantisierungsgrad und zum individuellen Quantisieren eines jeden Koeffizienten des Blocks mittels einer Quantisierungsmatrix (Fig. 4), wobei der Ausgang der Quantisierungsmittel (152) auch mit Mitteln (156) zur entsprechenden inversen Dequantisierung verbunden sind, gefolgt von Mitteln (157) zur entsprechenden inversen Transformation, gefolgt von Vollbildspeicher-Mitteln (142), die mit den Mitteln (17) zum Abschätzen von Bewegungsvektoren zur Bewegungskompepsation verbunden sind;
- Mitteln (154) zum Huffman-Kodieren der Blöcke quantisierter Koeffizienten und der Bewegungsvektoren, wodurch man Gruppen kodierter Koeffizienten erhält, die in dem Puffer (155) zwischengespeichert werden, wobei der Puffer über einen Kanalkodierer (16), in dem das Intra/Inter-Entscheidungs-Signal und die Adressen der Pseudozufalls-Abtastreihenfolge dem signalstrom zugefügt werden, das Ausgangssignal der Vorrichtung ausgibt.

4. Vorrichtung zur Dekodierung digitaler Bildfolgen mittels eines Verfahrens nach Anspruch 2 mit:
- einem Kanaldekoder (26), der ein entsprechendes Intra/Inter-Entscheidungs-Signal an eine Bewegungskompensationsschaltung (27) und Adressen der Pseudozufalls-Abtastreihenfolge an einen Vollbildspeicher (22) liefert;
- einer nachgeschalteten Pufferschaltung (255), die einen Dequantisierer (252) zum individuellen Dequantisieren eines jeden Blocks dekodierter Koeffizienten nach einem entsprechenden inversen Kodierungs-Quantisierungsgrad und zum individuellen Dequantisieren eines jeden dekodierten Koeffizienten mittels der inversen Anwendung der Kodierungs-Quantisierungsmatrix (Fig. 4) steuert;
- einem auf die Pufferschaltung (255) folgenden Huffman-Dekoder (254) zum Dekodieren der Gruppen kodierter Koeffizienten und Bewegungskompensations-Informationen, wodurch der Dequantisierer (252) Blöcke dekodierter Koeffizienten und die Bewegungskompensationsschaltung (27) Bewegungsvektoren erhält;
- einer auf den Dequantisierer (252) folgenden IDCT-Schaltung (251) zur entsprechenden inversen Transformierung der Blöcke dekodierter Koeffizienten mit einer inversen DCT in Blöcke von Pixelwerten beziehungsweise Pixeldifferenzwerten;
- einem nachgeschalteten Addierer (241), der im Falle des Inter-Vollbild-Modus die entsprechenden bewegungskompensierten Blöcke von Pixelwerten aus einem zweiten Vollbildspeicher (242) den Pixeldifferenzwerten hinzuaddiert;
- einer nachgeschalteten Inter/Intra-Schaltung (24), die von dem Kanaldekoder (26) über die Bewegungskompensationsschaltung (27) das Inter/Intra-Entscheidungs-Signal erhält und die den Addierer (241) wie oben beschreiben steuert, wodurch die Bewegungskompensationsschaltung (27) Blöcke von Pixelwerten des vorherigen Vollbildes aus dem zweiten Vollbildspeicher (242) erhält;
- dem Vollbildspeicher (22) zum Einfügen der Blöcke von Pixelwerten in die ausgegebenen Vollbilder des digitalen Videosignals in entsprechender Pseudozufalls-Reihenfolge.

## Revendications

1. Méthode de codage et de décodage de séquences d'images numériques, caractérisée en ce que lesdites séquences d'images sont divisées en trames (31), qui contiennent chacune divers blocs de pixels, consistant à :
- prendre par balayage pseudo-aléatoire desdites trames (31) lesdits blocs (32 - 36 ) de pixels pour former une séquence de blocs en vue du traitement séquentiel de ces blocs ;
- transformer (151) chacun desdits blocs de pixels en un bloc de coefficients ;
- quantifier (152, Fig. 6) chaque bloc de coefficients au moyen d'un niveau de quantification de blocs calculé individuellement, qui est contrôlé par l'état plein d'un tampon (155), et d'une matrice de quantification (Fig. 4) servant à quantifier individuellement chaque coefficient du bloc ;
- coder (154) chacun desdits blocs de coefficients quantifiés avec la longueur variable du mot, pour constituer ainsi un groupe de coefficients codés,
et consistant également à :
- décoder (254) respectivement chacun desdits groupes de coefficients codés, pour obtenir ainsi un bloc de coefficients décodés ;
- déquantifier (252) chaque bloc de coefficients décodés individuellement par l'intermédiaire du niveau inverse de quantification de codage respectif, contrôlés par l'état plein d'un second tampon (255) et par l'intermédiaire d'une matrice de quantification inverse en vue de la déquantification individuelle de chaque coefficient décodé du bloc ;
- procéder à la transformation inverse respective (251) dudit bloc de coefficients quantifiés pour obtenir un bloc de pixels ;
- insérer ledit bloc de pixels dans des trames (31) d'un signal vidéo numérique respectif suivant le même ordre pseudo-aléatoire que celui employé pour le codage.
2. Méthode conforme à la Revendication 1, qui représente un mode intratrame, également constitué des étapes de codage ci-après :
- le calcul (141) de blocs en mode intertrame de différences de pixels entre le bloc en cours et un bloc caractérisé par la même localisation spatiale respective dans la trame précédente ;
- la compensation de mouvement (17) desdits blocs de différences de pixels ;
- le calcul (18) pour chacun desdits blocs, d'une erreur de bloc, comme par exemple l'erreur quadratique et/ou l'erreur moyenne absolue, et une prise de décision (14) pour chacun desdits blocs concernant le mode à réaliser (intertrame compensé par mouvement ou intratrame), où ledit mode intratrame ou intertrame respectif est utilisé au décodage.
3. Appareil de codage de séquences d'images numériques utilisant une méthode conforme à la Revendication 2, intégrant :
- un moyen (11) de transmission d'un signal vidéo numérique où chaque trame dudit signal est constitué de divers blocs de pixels ;
- un moyen (10) de balayage des trames dans un ordre pseudo-aléatoire pour obtenir lesdits blocs de pixels ;
- un moyen (17) destiné à évaluer les vecteurs de mouvement pour la compensation de mouvement desdits blocs de pixels connectés au moyen (18) de calcul des erreurs de blocs entre lesdits blocs compensés par mouvement et lesdits blocs de pixels ;
- un moyen (141) de calculer des blocs de différences de pixels ;
- un moyen (14) de comparer les blocs intratrames de pixels et les blocs intertrame compensés par le mouvement des différences de pixels, et le choix d'un des deux blocs de valeur suivant le résultat dudit calcul d'erreurs de bloc (18), un signa de décision de type intra/inter étant inclus dans le signal émis par ledit appareil ;
- un moyen (151) de transformation desdits blocs de pixels et différences de pixels respectivement par une transformation DCT en blocs de coefficients ;
- un moyen (152) de quantification individuelle de chacun desdits blocs de coefficients en fonction d'un niveau de quantification contrôlé par l'état plein du tampon (155) et de quantification individuelle de chaque coefficient de blocs au moyen d'une matrice de quantification (Fig. 4), la sortie dudit moyen de quantification (152) étant également connectée au moyen (156) de déquantification inverse et suivie du moyen (157) de transformation inverse respective, lui-même suivi de la mémoire de trame (142), connectée audit moyen (17) d'estimation des vecteurs de mouvement en vue de la compensation du mouvement ;
- un moyen (154) de codage Huffman desdits blocs de coefficients quantifiés et desdits vecteurs de mouvement, pour constituer ainsi des groupes de coefficients codés provisoirement stockés dans ledit tampon (155), ce tampon émettant des signaux de sortie par l'intermédiaire d'un codeur de voies (16), où ledit signal d'inter/intra décision et les adresses dudit ordre de balayage pseudo-aléatoire sont ajoutés au flot de signaux, le signal de sortie dudit appareil.
4. Appareil de décodage de séquences d'images numériques par le biais d'une méthode conforme à la Revendication 2, intégrant :
- un décodeur de voies (26) qui fournit un circuit de compensation de mouvement (27) avec un signal d' inter/intra décision et une mémoire de trame (22) avec les adresses dudit ordre de balayage pseudo-aléatoire ;
- un circuit tampon postérieur (255) qui contrôle un déquantificateur (252) destiné à déquantifier individuellement chaque bloc de coefficients décodés suivant un niveau de quantification de codage inverse respectif et à déquantifier individuellement chaque coefficient décodé par l'utilisation inverse de ladite matrice de quantification de codage (Fig. 4) ;
- un décodeur Huffman (254), suivant ledit circuit tampon (255), destiné à décoder lesdits groupes de coefficients codés et les informations relatives à la compensation de mouvement, pour fournir ainsi des blocs de coefficients décodés audit déquantificateur (252) et des vecteurs de mouvement audit circuit de compensation de mouvement (27) ;
- un circuit IDCT (251), suivant ledit déquantificateur (252), en vue de la transformation inverse desdits blocs de coefficients décodés avec un DCT inverse aux blocs de pixels et différences de pixels respectivement ;
- un additionneur postérieur (241) qui ajoute, en cas de mode intertrame, le bloc compensé par mouvement de pixels à partir d'une seconde mémoire de trame (242) auxdites différences de pixels ;
- un inter/intra circuit (24) postérieur qui reçoit ledit inter/intra signal de décision provenant dudit décodeur de voies (26) par l'intermédiaire dudit circuit de compensation de mouvement (27) et qui contrôle ledit additionneur (241) comme décrit préalablement, où ledit circuit de compensation de mouvement (27) reçoit des blocs de pixels de la trame précédente provenant de ladite seconde mémoire de trame (242) ;
- ladite mémoire de trame (22) pour l'insertion de pixels dans lesdites trames de sortie dudit signal vidéo numérique dans un ordre pseudo-aléatoire.
